(19) Europäisches Patentamt

European Patent Office

Office européen des brevets

(11) **EP 2 479 725 A2**

(12) **EUROPÄISCHE PATENTANMELDUNG**

(43) Veröffentlichungstag:
    **25.07.2012 Patentblatt 2012/30**

(51) Int Cl.:
    ***G06T 5/50*** *(2006.01)*

(21) Anmeldenummer: **12151657.9**

(22) Anmeldetag: **19.01.2012**

(84) Benannte Vertragsstaaten:
    **AL AT BE BG CH CY CZ DE DK EE ES FI FR GB
    GR HR HU IE IS IT LI LT LU LV MC MK MT NL NO
    PL PT RO RS SE SI SK SM TR**
    Benannte Erstreckungsstaaten:
    **BA ME**

(30) Priorität: **20.01.2011 DE 102011002907**

(71) Anmelder: **DLR Deutsches Zentrum für Luft- und
    Raumfahrt e.V.
    51147 Köln (DE)**

(72) Erfinder:
    • **Zhu, Xiao Xiang
      81243 München (DE)**
    • **Bamler, Richard
      81375 Munchen (DE)**
    • **Wang, Xuan
      80937 München (DE)**

(74) Vertreter: **Fink Numrich
    Patentanwälte
    European Patent and Trademark Attorneys
    Wendl-Dietrich-Straße 14
    D-80634 München (DE)**

(54) **Verfahren zur rechnergestützten Verarbeitung digitalisierter Bilder**

(57) Die Erfindung betrifft ein Verfahren zur rechner-gestützten Verarbeitung digitalisierter Bilder, wobei die digitalisierten Bilder ($X_0$, Y) ein panchromatisches Bild ($X_0$) in einer ersten räumlichen Auflösung und ein oder mehrere spektrale Bilder (Y) in einer zweiten räumlichen Auflösung umfassen, wobei das panchromatische und das oder die spektralen Bilder ($X_0$, Y) die gleiche aufge-nommene Szene betreffen und die zweite räumliche Auflösung niedriger als die erste räumliche Auflösung ist. Im erfindungsgemäßen Verfahren wird das panchromati-sche Bild ($X_0$) in eine Anzahl von Segmenten mit jeweils einer Mehrzahl von Pixeln aufgeteilt, wodurch ein erstes Bild ($D_h$) erhalten wird. Ferner wird das panchromatische Bild ($X_0$) in ein panchromatisches Bild ($Y_0$) in der zweiten Auflösung gewandelt, und dieses gewandelte Bild ($Y_0$) wird in eine Anzahl von Segmenten entsprechend der Segmentierung des ersten Bildes ($D_h$) aufgeteilt, wo-durch ein zweites Bild ($D_1$) erhalten wird. Darüber hinaus wird ein jeweiliges spektrales Bild in eine Anzahl von Segmenten entsprechend der Segmentierung des er-sten Bildes ($D_h$) aufgeteilt, wodurch ein drittes Bild (y) erhalten wird. Für jedes Segment des dritten Bildes (y) wird ein Koeffizientenvektor ($\hat{\alpha}$) mit einer Anzahl von Koeffizienten geschätzt, wobei der Koeffizientenvektor ($\hat{\alpha}$) die Pixelwerte des jeweiligen Segments des dritten Bildes (y) als eine Linearkombination der Pixelwerte der Segmente des zweiten Bildes ($D_1$) unter der Randbedin-gung einer möglichst geringen Anzahl von Koeffizienten modelliert. Schließlich wird für ein jeweiliges Segment des ersten Bildes ($D_h$), welches dem jeweiligen Segment des dritten Bildes (y) entspricht, eine Linearkombination der Pixelwerte der Segmente des ersten Bildes ($D_h$) ba-sierend auf dem Koeffizientenvektor ($\hat{\alpha}$) gebildet, woraus ein viertes Bild ($\hat{X}$) abgeleitet wird, welches das jeweilige spektrale Bild in der ersten Auflösung repräsentiert.

Fig. 1

**Beschreibung**

Die Erfindung betrifft ein Verfahren zur rechnergestützten Verarbeitung digitalisierter Bilder sowie eine entsprechende Vorrichtung und ein entsprechendes Computerprogrammprodukt.

Die Erfindung liegt allgemein auf dem Gebiet der digitalen Bildverarbeitung. Im Besonderen betrifft die Erfindung die Fusion digitalisierter Bilder, um hierdurch ein digitalisiertes Bild mit verbesserter Bildqualität zu ermitteln. Insbesondere im Bereich der Fernerkundung, bei der über geeignete Sensoren, wie z.B. Multispektral-oder Hyperspektral-Sensoren, die Erdoberfläche aufgenommen wird, sind verschiedene Techniken bekannt, um digitalisierte Bilder geeignet zu fusionieren. Bei den derzeit zur Fernerkundung verwendeten Sensoren, mit denen die Erdoberfläche über Erdbeobachtungssatelliten oder gegebenenfalls auch mit Flugzeugen aufgenommen wird, setzt sich eine Bildaufnahme aus einem sog. panchromatischen Bild mit hoher räumlicher Auflösung und einer Mehrzahl von spektralen Bildern mit geringer Auflösung zusammen. Das panchromatische Bild ist dabei eine Aufnahme über im Wesentlichen das gesamte Wellenlängenspektrum von für das menschliche Auge sichtbarem Licht, gegebenenfalls aber auch einschließlich nicht sichtbarer Spektralbereiche. Demgegenüber repräsentieren die spektralen Bilder entsprechende Aufnahmen in vorgegebenen Spektralbändern, welche gegebenenfalls auch außerhalb des sichtbaren Wellenlängenbereichs liegen können. Mit sog. Verfahren zur Panbildschärfung (englisch: pan-sharpening) werden die spektralen Bilder in geeigneter Weise mit dem panchromatischen Bild fusioniert, um hierdurch die räumliche Auflösung der spektralen Bilder zu verbessern.

In dem Dokument C. Pohl und J.L. Van Gernderen: "Multisensor image fusion in remote sensing: Concepts, methods and applications", International Journal of Remote Sensing, Vol. 19, Nummer 5, Seiten 823 bis 854, 1998, wird ein Überblick über bekannte Methoden der Panbildschärfung gegeben. Häufig verwendete Verfahren sind die IHS-Technik (Intensity-Hue-Saturation), die Hauptkomponentenanalyse PCA (Principal Components Analysis), die sog. Brovey-Transformation und die Wavelet-basierte Bildfusion. Die IHS- und die Brovey-Transformation basieren auf der ungenauen Annahme, dass das panchromatische Bild eine Linearkombination der Frequenzbänder der spektralen Bilder ist. Dies führt zu signifikanter spektraler Verzerrung. Die PCA-Methode projiziert miteinander korrelierte Kanäle der spektralen Bilder in einen Satz von unkorrelierten Hauptkomponenten durch eine orthogonale Transformation, welche derart definiert ist, dass die erste Hauptkomponente die größte Varianz aufweist. Die Grauwert-Differenz zwischen der ersten Hauptkomponente und dem panchromatischen Bild verursacht signifikante Farbverzerrung. Die Wavelet-Fusion führt auch zu spektraler Verzerrung, da sie direkt die räumlichen Details des panchromatischen Bildes in die niedrig aufgelösten spektralen Bilder implementiert, welche eine unterschiedliche Grauwert-Verteilung aufweisen.

Aufgabe der Erfindung ist es deshalb, ein Verfahren zur Verarbeitung von digitalisierten Bildern zu schaffen, welches ein panchromatisches Bild mit einem oder mehreren spektralen Bildern derart fusioniert, dass das resultierende Bild eine hohe Bildqualität aufweist.

Diese Aufgabe wird durch das Verfahren gemäß Patentanspruch 1 bzw. die Vorrichtung gemäß Patentanspruch 15 bzw. das Computerprogrammprodukt gemäß Patentanspruch 17 gelöst. Weiterbildungen der Erfindung sind in den abhängigen Ansprüchen definiert.

Das erfindungsgemäße Verfahren dient zur rechnergestützten Verarbeitung von digitalisierten Bildern, welche ein panchromatisches Bild in einer ersten räumlichen Auflösung und ein oder mehrere spektrale Bilder in einer zweiten räumlichen Auflösung umfassen, wobei das panchromatische und das oder die spektralen Bilder die gleiche aufgenommene Szene betreffen und die zweite räumliche Auflösung niedriger als die erste räumliche Auflösung ist. Unter einem panchromatischen Bild ist dabei ein Bild zu verstehen, welches im Wesentlichen den gesamten sichtbaren Wellenlängenbereich und gegebenenfalls auch nicht sichtbare Spektralbereiche umfasst. Im Unterschied hierzu betrifft ein spektrales Bild nur ein Frequenzband, welches einen schmaleren Wellenlängenbereich als das panchromatische Bild abdeckt. Mehrere spektrale Bilder können dabei zu einem Multispektralbild zusammengesetzt sein, in dem die Bildinformationen von allen Frequenzbändern der spektralen Bilder codiert sind. Ein spektrales Bild kann gegebenenfalls auch vorverarbeitet sein und z.B. einer IHS-Transformation unterzogen worden sein, bei der die Farbkanäle in die Kanäle Intensität, Farbton und Sättigung zerlegt sind.

Im Rahmen des erfindungsgemäßen Verfahrens wird in einem Schritt a) das panchromatische Bild in eine Anzahl von Segmenten mit jeweils einer Mehrzahl von Pixeln aufgeteilt, wodurch ein erstes Bild erhalten wird. Der Begriff des ersten Bildes und auch des nachfolgend erläuterten zweiten bzw. dritten Bildes ist dabei weit zu verstehen. Es handelt sich insbesondere nicht mehr um ein Bild im eigentlichen Sinne, sondern um einen geordneten Satz von Bildsegmenten. Die Segmente können dabei disjunkt sein oder gegebenenfalls auch miteinander überlappen. In einem Schritt b) wird das panchromatische Bild in ein panchromatisches Bild in der zweiten Auflösung (d.h. in der Auflösung der spektralen Bilder) gewandelt. Dieses gewandelte Bild wird dann ebenfalls in einer Anzahl von Segmenten entsprechend der Segmentierung des ersten Bildes aufgeteilt, wodurch ein zweites Bild erhalten wird. Durch die Wahl der gleichen Segmentierung für das erste und das zweite Bild existiert eine eindeutige Zuordnung zwischen den Segmenten des ersten Bildes und des zweiten Bildes, wobei die Segmente des ersten Bildes aufgrund der höheren Auflösung eine entsprechend größere Anzahl an Pixeln enthalten.

In einem Schritt c) des erfindungsgemäßen Verfahrens wird ein jeweiliges spektrales Bild bzw. das spektrale Bild (sofern nur ein einzelnes spektrales Bild vorhanden ist) in eine Anzahl von Segmenten entsprechend der Segmentierung des ersten bzw. des zweiten Bildes aufgeteilt, wodurch ein drittes Bild erhalten wird. Die Segmente des dritten Bildes sind somit wiederum eindeutig entsprechenden Segmenten des ersten und des zweiten Bildes zugeordnet. Insbesondere hat das dritte Bild dieselbe Auflösung wie das zweite Bild.

In einem Schritt d) wird für jedes Segment des dritten Bildes ein Koeffizientenvektor mit einer Anzahl von Koeffizienten geschätzt, wobei der Koeffizientenvektor die Pixelwerte des jeweiligen Segments des dritten Bildes als eine Linearkombination der Pixelwerte der Segmente des zweiten Bildes unter der Randbedingung einer möglichst geringen Anzahl von Koeffizienten modelliert. Die entsprechenden Koeffizienten des Koeffizientenvektors stellen somit die Koeffizienten dar, mit denen die Pixelwerte der Segmente des zweiten Bildes linear miteinander kombiniert werden, um hierdurch das entsprechende Segment des dritten Bildes zu erhalten.

In einem Schritt e) des erfindungsgemäßen Verfahrens wird für ein jeweiliges Segment des ersten Bildes, welches dem jeweiligen Segment des dritten Bildes entspricht, eine Linearkombination der Pixelwerte der Segmente des ersten Bildes basierend auf dem zuvor ermittelten Koeffizientenvektor gebildet, woraus ein viertes Bild abgeleitet wird, welches das jeweilige spektrale Bild in der ersten Auflösung repräsentiert. Das vierte Bild ist somit das resultierende Bild der erfindungsgemäßen Bildfusion. Werden mehrere spektrale Bilder verarbeitet, können die jeweiligen vierten Bilder zu einem Multispektralbild zusammengesetzt werden.

Das erfindungsgemäße Verfahren beruht auf der Erkenntnis, dass die jeweiligen Segmente in einem spektralen Bild als Linearkombination entsprechender Segmente des panchromatischen Bildes repräsentiert werden können. Da für diese Repräsentation eine Vielzahl von Lösungen existiert, wird die weitere Randbedingung berücksichtigt, dass die Anzahl der Koeffizienten der Linearkombination möglichst gering ist. Die Lösung eines unterbestimmten Gleichungssystems unter der Randbedingung eines spärlich-besetzten Koeffizientenvektors ist aus dem Gebiet des sog. "Compressive Sensing" bekannt. Erfindungsgemäß werden somit Methoden aus dem Compressive Sensing erstmals zur Fusion digitalisierter Bilder eingesetzt.

Das erfindungsgemäß rekonstruierte (vierte) Bild ist von hoher Bildqualität, die besser als die mit herkömmlichen Verfahren erreichte Bildqualität ist. Dies konnte durch die Erfinder basierend auf Simulationen nachgewiesen werden, wie noch näher in der detaillierten Beschreibung dargelegt wird. Insbesondere nimmt das erfindungsgemä-ße Verfahren kein Modell für das panchromatische Bild an, was zu einem resultierenden Bild mit geringerer spektraler Verzerrung führt.

Die oben genannten Schritte a) bis e) des erfindungsgemäßen Verfahrens dienen lediglich zur einfacheren Referenzierung der Verfahrensschritte und legen nicht zwangsläufig die sequentielle Abarbeitung des Verfahrens basierend auf der Reihenfolge dieser Schritte fest.

In einer bevorzugten Ausführungsform wird das jeweilige spektrale Bild in Schritt c) in Segmente aus (n×n)-Pixeln aufgeteilt, wobei n vorzugsweise zwischen 3 und 9 liegt, so dass die Segmente aussagekräftige Informationen über Intensitätsverläufe bzw. Konturen im Bild enthalten. Basierend auf der Aufteilung in (n×n)-Pixel erfolgt auch in Schritt a) und b) eine Segmentierung in entsprechende Pixelquadrate.

In einer weiteren Ausgestaltung des erfindungsgemäßen Verfahrens wird die Wandlung des panchromatischen Bildes in Schritt b) in an sich bekannter Weise über eine Tiefpassfilterung des panchromatischen Bildes und eine Heruntertastung des panchromatischen Bildes auf die zweite Auflösung durchgeführt. Die Tiefpassfilterung ist dabei vorzugsweise derart ausgestaltet, dass das gefilterte Bild die Punktantwort des gerade verarbeiteten spektralen Bildes besitzt. Auf diese Weise erhält man eine gute Repräsentation des spektralen Bildes im panchromatischen Kanal.

In einer weiteren bevorzugten Ausgestaltung des erfindungsgemäßen Verfahrens entsprechen die Pixelwerte des jeweiligen Segments des vierten Bildes zumindest teilweise der in Schritt e) gebildeten Linearkombination der Pixelwerte der Segmente des ersten Bildes. Insbesondere besteht auch die Möglichkeit, dass alle Pixelwerte des jeweiligen Segments des vierten Bildes dieser Linearkombination entsprechen. In dieser Variante geht das rekonstruierte Bild somit direkt aus der Linearkombination hervor. Diese Ausführungsform kommt vorzugsweise dann zum Einsatz, wenn die einzelnen Segmente, in welche die Bilder aufgeteilt sind, disjunkte, nicht miteinander überlappende Segmente sind.

In einer besonders bevorzugten Ausführungsform des erfindungsgemäßen Verfahrens wird der Koeffizientenvektor in Schritt d) mittels einer an sich aus dem Stand der Technik bekannten L1-L2-Norm-Minimierung geschätzt. Diese Minimierung garantiert, dass der geschätzte Koeffizientenvektor spärlich-besetzt ist, d.h. es wird hierdurch die Randbedingung erfüllt, dass der Koeffizientenvektor eine möglichst geringe Anzahl an Koeffizienten aufweist.

Vorzugsweise wird ein geschätzter Koeffizientenvektor $\hat{\alpha}$ in Schritt d) basierend auf folgender Minimierung ermittelt:

$$\hat{\boldsymbol{\alpha}} = \arg\min_{\alpha}\left\{\lambda\left\|\boldsymbol{\alpha}\right\|_1 + \frac{1}{2}\left\|\mathbf{D}_l\boldsymbol{\alpha} - \mathbf{y}\right\|_2^2\right\} \qquad (A)$$

wobei $\alpha$ der Koeffizientenvektor ist;

wobei $\lambda$ ein Lagrange-Multiplikator ist;

wobei $\mathbf{D}_l$ eine Matrix ist, welche die Pixelwerte für jedes Segment des zweiten Bildes als Spalten enthält;

wobei $\mathbf{y}$ ein Vektor aus den Pixelwerten des jeweiligen Segments des dritten Bildes ist;

wobei die in Schritt e) gebildete Linearkombination $\hat{\mathbf{x}}$ der Pixelwerte der Segmente des ersten Bildes vorzugsweise wie folgt lautet:

$$\hat{\mathbf{x}} = \mathbf{D}_h \hat{\boldsymbol{\alpha}},$$

wobei $\mathbf{D}_h$ eine Matrix ist, welche die Pixelwerte für jedes Segment des ersten Bildes als Spalten enthält.

Wie bereits oben erwähnt, kann das panchromatische Bild in Schritt a) und somit auch die Segmente im zweiten und dritten Bild in nicht-überlappende oder auch in überlappende Segmente aufgeteilt werden. Im Falle von überlappenden Segmenten ist das erfindungsgemäße Verfahren vorzugsweise derart ausgestaltet, dass für ein jeweiliges Segment des vierten Bildes die Pixelwerte von überlappenden Pixeln, welche sich aus den entsprechenden Linearkombinationen der Pixelwerte der Segmente des ersten Bildes ergeben, überblendet werden, wodurch sich der entsprechende Pixelwert des vierten Bildes ergibt. Demgegenüber werden nicht-überlappende Pixel in dem entsprechenden Segment ohne Überblendung als die entsprechende Linearkombination dargestellt. Die Überblendung der Pixelwerte kann z.B. über eine geeignet gewichtete Mittelung der Pixel in Abhängigkeit von deren Position erfolgen. Gegebenenfalls kann auch das arithmetische Mittel der entsprechend überlappenden Pixelwerte gebildet werden.

In einer weiteren Ausgestaltung des erfindungsgemäßen Verfahrens, welche insbesondere bei überlappenden Segmenten zum Einsatz kommt, wird in Schritt d) ferner ein Kriterium berücksichtigt, wonach für ein jeweiliges Segment des ersten Bildes der Pixelwert eines mit einem anderen Segment überlappenden Pixels, der sich aus der Linearkombination der Pixelwerte der Segmente des ersten Bildes basierend auf der Anzahl von Koeffizienten des Koeffizientenvektors ergibt, einem bereits zuvor ermittelten Pixelwert des entsprechenden überlappenden Pixels aus dem vierten Bild entspricht. Dies setzt somit voraus, dass der Pixelwert des überlappenden Pixels aus dem vierten Bild bereits für ein vorhergehendes Segment geeignet bestimmt wurde.

In einer bevorzugten Variante wird ein geschätzter Koeffizientenvektor $\hat{\alpha}$ in Schritt d) basierend auf der folgenden Minimierung ermittelt:

$$\hat{\boldsymbol{\alpha}} = \arg\min_{\alpha} \left\{ \lambda \left\| \boldsymbol{\alpha} \right\|_1 + \frac{1}{2} \left\| \tilde{\mathbf{D}} \boldsymbol{\alpha} - \tilde{\mathbf{y}} \right\|_2^2 \right\} \qquad (B)$$

wobei

$$\tilde{\mathbf{D}} = \begin{bmatrix} \mathbf{D}_l \\ \beta \mathbf{P} \mathbf{D}_h \end{bmatrix}, \quad \tilde{\mathbf{y}} = \begin{bmatrix} \mathbf{y} \\ \beta \mathbf{w} \end{bmatrix}$$

wobei $\alpha$ der Koeffizientenvektor ist;

wobei $\lambda$ ein Lagrange-Multiplikator ist;

wobei $\mathbf{D}_l$ eine Matrix ist, welche die Pixelwerte für jedes Segment des zweiten Bildes als Spalten enthält;

wobei $\mathbf{y}$ ein Vektor aus den Pixelwerten der Pixel des jeweiligen Segments des dritten Bildes ist;

wobei $\mathbf{D}_h$ eine Matrix ist, welche die Pixelwerte für jedes Segment des ersten Bildes als Spalten enthält;

wobei $\mathbf{w}$ ein Vektor in Bezug auf ein Segment des ersten Bildes ist, für welches bereits der Schritt e) des Verfahrens durchgeführt wurde und welches mit dem Segment des ersten Bildes, das dem jeweiligen Segment des dritten Bildes entspricht, überlappt, wobei die Pixelwerte im Vektor $\mathbf{w}$ die überlappenden Pixel der beiden Segmente betreffen und den Pixelwerten des vierten Bildes entsprechen;

wobei $\mathbf{P}$ eine Diagonalmatix ist, in der diejenigen Diagonalelemente, die den überlappenden Pixeln der beiden Segmente entsprechen, den Wert 1 aufweisen, wohingegen die anderen Diagonalelemente den Wert 0 aufweisen.

wobei $\beta$ ein Gewichtungsfaktor ist;

wobei die in Schritt e) gebildete Linearkombination $\hat{\mathbf{x}}$ der Pixelwerte der Segmente des dritten Bildes vorzugsweise wie folgt lautet:

$$\hat{\mathbf{x}} = \mathbf{D}_h \hat{\boldsymbol{\alpha}} \, ,$$

wobei $\mathbf{D}_h$ eine Matrix ist, welche die Pixelwerte für jedes Segment des ersten Bildes als Spalten enthält.

Der basierend auf den Gleichungen (A) bzw. (B) ermittelte Koeffizientenvektor $\hat{\alpha}$ kann den geschätzten Koeffizientenvektor im Sinne von Anspruch 1 darstellen. Gegebenenfalls kann der Koeffizientenvektor $\hat{\alpha}$ auch basierend auf der nachfolgend beschriebenen Variante korrigiert werden. In diesem Fall stellt der korrigierte Koeffizientenvektor den geschätzten Koeffizientenvektor im Sinne von Anspruch 1 dar.

Da bekannt ist, dass die L1-L2-Norm-Minimierung die Koeffizienten des Vektors $\hat{\alpha}$ leicht unterschätzt, können die Koeffizientenschätzungen nachträglich verbessert werden, indem sie basierend auf folgendem Verfahren korrigiert werden:

Nach Erhalt der Schätzung ä des Koeffientenvektors werden neue Matrizen $\mathbf{D}_l{'}$ und $\mathbf{D}_h{'}$ aus $\mathbf{D}_l$ und $\mathbf{D}_h$ dergestalt erzeugt, dass aus $\mathbf{D}_l$ und $\mathbf{D}_h$ diejenigen Spalten eliminiert werden, für welche der jeweilige Koeffizient in $\hat{\alpha}$ (d.h. der Koeffizient, der bei der Multiplikation $\mathbf{D}_l\hat{\alpha}$ mit den Einträgen der jeweiligen Spalte multipliziert wird) Null oder nahezu Null ist (d.h. weniger als ein vorbestimmter Schwellwert von Null abweicht). Desgleichen wird aus $\hat{\alpha}$ ein verkürzter Koeffizientenvektor $\hat{\alpha}{'}$ erzeugt, indem aus $\hat{\alpha}$ alle diese Koeffizienten eliminiert werden, die Null oder nahezu Null sind. Der korrigierte Koeffizientenvektor $\tilde{\alpha}$ wird schließlich durch eine bekannte Minimierung der kleinsten Quadrate berechnet:

$$\tilde{\boldsymbol{\alpha}} = \arg \min_{\hat{\alpha}'} \left\{ \left\| \mathbf{D}_l{'} \hat{\boldsymbol{\alpha}}{'} - \mathbf{y} \right\|_2^2 \right\} .$$

Die in Schritt e) gebildete Linearkombination $\hat{\mathbf{x}}$ wird dann aus dem korrigierten geschätzten Koeffizientenvektor $\tilde{\alpha}$ wie folgt gebildet:

$$\hat{\mathbf{x}} = \mathbf{D}_h{'} \, \tilde{\boldsymbol{\alpha}} .$$

Wie bereits erwähnt, ist in dieser Variante der Erfindung der korrigierte Koeffizientenvektor $\tilde{\alpha}$ der geschätzte Koeffizientenvektor im Sinne von Anspruch 1.

Im Rahmen des erfindungsgemäßen Verfahrens können die jeweiligen Segmente in Schritt d) und e) in einer vorbestimmten Reihenfolge im dritten bzw. ersten Bild verarbeitet werden, beispielsweise zeilenweise oder spaltenweise. Es besteht jedoch auch die Möglichkeit, die Segmente in zufälliger Reihenfolge im Bild zu verarbeiten. In einer Variante des erfindungsgemäßen Verfahrens erfolgt die Verarbeitung der Segmente derart, dass in Schritt d) und e) zunächst nicht-überlappende Segmente und erst anschließend überlappende Segmente verarbeitet werden. Die nicht-überlappenden Segmente werden dabei vorzugsweise basierend auf Anspruch 6 des erfindungsgemäßen Verfahrens verarbeitet, wohingegen die überlappenden Segmente vorzugsweise basierend auf Anspruch 10 des erfindungsgemäßen Verfahrens verarbeitet werden.

Die im erfindungsgemäßen Verfahren verarbeiteten digitalisierten Bilder können beliebige Arten von Bildern betreffen. Vorzugsweise wird die Erfindung im Rahmen der Fernerkundung eingesetzt. In diesem Fall stellen die digitalisierten Bilder eine Aufnahme eines Ausschnitts der Erdoberfläche dar, beispielsweise eine Satellitenaufnahme. Die Aufnahmen werden vorzugsweise mit einem Multispektralinstrument und/oder mit einem Hyperspektralinstrument gemacht, wobei diese Arten von Instrumenten hinlänglich aus dem Stand der Technik bekannt sind.

Neben dem oben beschriebenen Verfahren umfasst die Erfindung ferner eine Vorrichtung zur Verarbeitung digitalisierter Bilder. Diese Vorrichtung enthält entsprechende erste bis fünfte Mittel, welche dazu ausgelegt sind, die jeweiligen Verfahrensschritte a) bis e) des erfindungsgemäßen Verfahrens durchzuführen. Diese Mittel sind in geeigneter Weise durch Hardware bzw. Software bzw. eine Kombination aus Hardware und Software realisiert und können zu einer Rechnereinheit zusammengefasst sein. Vorzugsweise ist die Vorrichtung derart ausgestaltet, dass eine oder mehrere der oben beschriebenen Varianten des erfindungsgemäßen Verfahrens mit der Vorrichtung durchführbar sind.

Die Erfindung betrifft darüber hinaus ein Computerprogrammprodukt mit einem auf einem maschinenlesbaren Träger gespeicherten Programmcode zur Durchführung des erfindungsgemäßen Verfahrens bzw. einer oder mehrerer Ausführungsformen des erfindungsgemäßen Verfahrens, wenn das Programm auf einem Rechner abläuft.

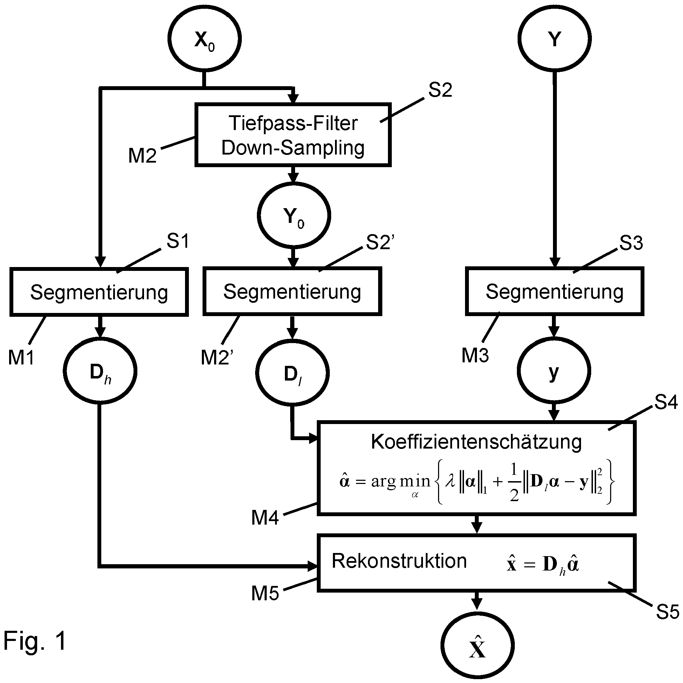

Ausführungsbeispiele der Erfindung werden nachfolgend anhand der beigefügten Fig. 1 detailliert beschrieben. Diese Figur zeigt in schematischer Darstellung ein Ablaufdiagramm, welches die Schritte einer Ausführungsform des erfindungsgemäßen Verfahrens bzw. die zur Durchführung der Schritte verwendeten Komponenten wiedergibt.

Das nachfolgend anhand von Fig. 1 beschriebene Verfahren verwendet als eine Eingangsgröße ein panchromatisches Bild $X_0$. Dieses Bild zeigt eine Szene, die über eine Kamera mit breitbandiger spektraler Empfindlichkeit, welche im Wesentlichen den gesamten sichtbaren Bereich des menschlichen Auges abdeckt, ggf. aber auch nichtsichbare Spektralbereiche, aufgenommen wurde. Als weitere Eingangsgrößen fließen ein oder mehrere spektrale Bilder Y ein, welche die gleiche Szene wie das panchromatische Bild $X_0$ zeigen. Die spektralen Bilder wurden jedoch nur in einem jeweiligen Spektralbereich, z.B. im rotfarbigen, blaufarbigen oder grünfarbigen Spektralbereich, aufgenommen. In einer besonders bevorzugten Ausführungsform stellen die Bilder $X_0$ und Y Fernerkundungsbilder dar, welche von einem Satelliten bzw. einem Flugzeug aufgenommen wurden und Ausschnitte der Erdoberfläche zeigen. Die Szene entspricht somit einem aufgenommenen Ausschnitt der Erdoberfläche. Beispielsweise können die Bilder $X_0$ und Y über ein Multispektralinstrument aufgenommen sein, welches gleichzeitig die Aufnahme eines panchromatischen Bildes und mehrerer spektraler Bilder in verschiedenen Frequenzbereichen generiert.

Das der Erfindung zu Grunde liegende Problem besteht darin, dass das panchromatische Bild $X_0$ mit einer höheren räumlichen Auflösung aufgenommen ist als die spektralen Bilder Y und man die Bildinformationen der spektralen Bilder auch in der höheren Auflösung erhalten möchte. Ziel des erfindungsgemäßen Verfahrens ist es somit, ein qualitativ hochwertiges spektrales Bild in der Auflösung des panchromatischen Bildes unter Verwendung von Informationen aus dem panchromatischen Bild zu generieren.

Im Folgenden wird das erfindungsgemäße Verfahren anhand von Fig. 1 für ein einzelnes spektrales Bild Y beschrieben, wobei das Verfahren auch in gleicher Weise parallel oder sequentiell für mehrere spektrale Bilder unter Verwendung des gleichen panchromatischen Bildes $X_0$ durchgeführt werden kann. Gemäß der Ausführungsform der Fig. 1 wird eine sog. Panbildschärfung durchgeführt, welche im Unterschied zu bekannten Verfahren eine Methodik einsetzt, die aus dem Gebiet des "Compressive Sensing" bekannt sind. Gemäß dieser Methodik wird nach einer Lösung für ein unterbestimmtes Gleichungssystem gesucht, die durch einen spärlich besetzten Koeffizientenvektor repräsentiert wird. In Fig. 1 sind die einzelnen durchgeführten Schritte mit S1, S2, S2', S3, S4, S5 und S6 bezeichnet. Die einzelnen Schritte werden dabei rechnergestützt ausgeführt und jeder Schritt kann durch ein entsprechendes Rechenmittel ausgeführt werden, wobei die Rechenmittel in Fig. 1 für die einzelnen Schritte beispielhaft mit M1, M2, M2', M3, M4 und M5 bezeichnet sind.

Das Verfahren der Fig. 1 gliedert sich in drei Hauptschritte. Zunächst werden das panchromatische Bild $X_0$ und das spektrale Bild Y vorverarbeitet, um hierdurch segmentierte Bilder zu erzeugen, welche unter anderem ein hochaufgelöstes erstes Bild $D_h$ und ein niedrig-aufgelöstes zweites Bild $D_1$ umfassen. Diese Bilder können als Lexika aufgefasst werden, in denen für entsprechende Bildsegmente die darin enthaltenen Pixel in der Form von Pixelvektoren hinterlegt sind. Nach der Vorverarbeitung erfolgt dann die Generierung eines spärlich besetzten Koeffizientenvektors für das niedrig-aufgelöste und segmentierte spektrale Bild. In einem weiteren Schritt wird dann mittels des Koeffizientenvektors und Informationen aus dem panchromatischen Bild ein spektrales Bild in der Auflösung des panchromatischen Bildes generiert. Es wird nachfolgend zunächst eine Ausführungsform erläutert, in der die einzelnen Bilder in disjunkte, nicht überlappende Segmente aufgeteilt werden.

Gemäß Fig. 1 wird in einem Schritt S1 das ursprüngliche panchromatische Bild $X_0$ in eine Vielzahl von vorzugsweise quadratischen, gleich großen Segmenten aus mehreren Pixeln aufgeteilt, wodurch das segmentierte panchromatische Bild $D_h$ erhalten wird. In diesem Bild sind für jedes Segment die einzelnen Pixelwerte der darin enthaltenen Pixel in der Form eines Pixelvektors hinterlegt. In einem zweiten Schritt S2 wird auf das Bild $X_0$ zunächst eine Tiefpass-Filterung und eine Heruntertastung (englisch: down-sampling) angewendet, wobei die Heruntertastung derart ausgestaltet ist, dass das heruntergetastete Bild $Y_0$ die gleiche niedrigere Auflösung sowie dasselbe Abtastraster wie das spektrale Bild Y aufweist. Die Tiefpass-Filterung ist vorzugsweise derart gewählt, dass das Bild $X_0$ eine ähnliche Punktantwort wie das spektrale Bild Y aufweist. Das gefilterte und heruntergetastete Bild $Y_0$ wird in einem Schritt S2' auch einer Segmentierung unterzogen, und zwar derart, dass die für das Bild $Y_0$ erzeugten Segmente jeweils denselben Bildinhalt repräsentieren wie die entsprechenden Segmenten im Bild $D_h$, jedoch in geringerer Auflösung. Somit weisen die für das Bild $Y_0$ erzeugten Segmente eine entsprechende reduzierte Anzahl an Pixeln auf. Vorzugsweise wird in Schritt S2' eine Aufteilung in quadratische Segmente mit typischerweise 3×3 bis 9×9 Pixeln vorgenommen, wobei die entsprechenden Segmente, welche in Schritt S1 erzeugt werden, um den Faktor, gemäß dem die Auflösung im panchromatischen Bild $X_0$ größer ist, vergrößert sind. Der Schritt S2' erzeugt somit das niedrig-aufgelöste panchromatische Bild $D_1$. Im Rahmen des Schritts S3 der Fig. 1 wird auch das spektrale Bild Y geeignet in Segmente aufgeteilt, wobei die Segmentierung nunmehr der Segmentierung gemäß Schritt S2' entspricht. Hierdurch wird ein niedrig-aufgelöstes segmentiertes Bild y erhalten, welches für jedes Segment einen Pixelvektor mit den Pixelwerten der im Segment enthaltenen Pixel enthält.

Im Rahmen des Schritts S4 erfolgt nunmehr eine Schätzung eines Koeffizientenvektors $\hat{\alpha}$ basierend auf folgender Modellierung:

Es wird davon ausgegangen, dass jedes einzelne Segment im Bild y repräsentiert werden kann durch eine Linearkombination von Segmenten im niedrig-aufgelösten panchromatischen Bild $D_l$. Dies lässt sich mathematisch wie

folgt beschreiben:

$$\mathbf{y} = \mathbf{D}_l\, \boldsymbol{\alpha}\ .$$

**y** stellt dabei den Vektor aus Pixelwerten eines Segments des Bildes y dar. $\mathbf{D}_l$ ist eine Matrix, welche die Pixelwerte für jedes Segment des Bildes $D_1$ als Spalte enthält. $\alpha$ stellt die Koeffizienten der Linearkombination in der Form eines Koeffizientenvektors mit Einträgen für jedes Segment aus dem Bild $D_1$ dar.

Das obige Gleichungssystem ist unterbestimmt, d.h. es existiert eine Vielzahl von Lösungen für dieses Gleichungssystem. Um das Gleichungssystem geeignet zu lösen, wird die weitere, aus dem Gebiet des Compressive Sensing bekannte Randbedingung eingeführt, wonach der Koeffizientenvektor $\alpha$ spärlich besetzt sein soll, d.h. eine möglichst geringe Anzahl von Einträgen enthalten soll. Die Erfinder konnten durch Simulationen nachweisen, dass über eine derartige Lösung des obigen Gleichungssystems ein qualitativ hochwertiges spektrales Bild mit höherer Auflösung erhalten werden kann. Zur Lösung des Gleichungssystems mit der Randbedingung eines spärlich besetzten Koeffizientenvektors wird in der hier beschriebenen Ausführungsform die an sich aus dem Stand der Technik bekannte L1-L2-Norm-Minimierung eingesetzt.

Das Minimierungsproblem lautet dabei für jedes einzelne Segment im Bild y wie folgt:

$$\hat{\boldsymbol{\alpha}} = \arg\min_{\alpha}\left\{ \lambda\,\|\boldsymbol{\alpha}\|_1 + \frac{1}{2}\|\mathbf{D}_l\boldsymbol{\alpha} - \mathbf{y}\|_2^2 \right\} \qquad (1).$$

Wie oben dargelegt, bezeichnet y den jeweiligen Pixelvektor des gerade betrachteten Segments. $\mathbf{D_1}$ ist die Matrix, welche für jedes Segment des Bildes $D_1$ einen entsprechenden Pixelvektor der Pixelwerte des Segments als Spaltenvektor enthält. $\alpha$ bezeichnet den Koeffizientenvektor für das gerade betrachtete Segment. $\hat{\alpha}$ stellt den über die L1-L2-Norm-Minimierung geschätzten Koeffizientenvektor dar. $\lambda$ bezeichnet den verwendeten Lagrange-Multiplikator. Das Symbol $\|\cdot\|_1$ bezeichnet die L1-Norm und das Symbol $\|\cdot\|_2$ die L2-Norm. Die L1-L2-Norm-Minimierung wird für jedes Segment des Bildes y durchgeführt, so dass eine Anzahl von Koeffizientenvektoren entsprechend der Anzahl von Segmenten im Bild y erhalten wird. Die L1-L2-Norm-Minimierung gemäß Gleichung (1) garantiert eine spärlich besetzte Lösung für den Koeffizientenvektor $\hat{\alpha}$ und kann mit dem Fachmann hinlänglich bekannten Verfahren, insbesondere einem konvexen Optimierungs-Algorithmus, gelöst werden.

Basierend auf dem für jedes Segment geschätzten Koeffizientenvektor $\hat{\alpha}$ wird in Schritt S5 unter Verwendung des segmentierten, hochaufgelösten panchromatischen Bildes $D_h$ ein hochaufgelöstes spektrales Bild $\hat{X}$ basierend auf folgender Gleichung rekonstruiert:

$$\hat{\mathbf{x}} = \mathbf{D}_h\hat{\boldsymbol{\alpha}} \qquad (2).$$

In der obigen Gleichung repräsentiert $\mathbf{D_h}$ eine Matrix, welche die Pixelwerte der Segmente des hochaufgelösten panchromatischen Bildes $D_h$ als Spalten enthält. $\hat{\mathbf{x}}$ repräsentiert den jeweiligen Pixelvektor des rekonstruierten Bildes $\hat{X}$ für das entsprechende Segment, für den der Koeffizientenvektor $\hat{\alpha}$ geschätzt wurde. Durch die Pixelvektoren $\hat{\mathbf{x}}$ aller Segmente wird somit das rekonstruierte geschärfte Bild $\hat{X}$ gebildet. Die obige Gleichung (2) verwendet somit die ursprünglich für das niedrig-aufgelöste spektrale Bild y ermittelten Koeffizientenvektoren, um damit unter Verwendung des hochaufgelösten panchromatischen Bildes $D_h$ ein besser aufgelöstes spektrales Bild $\hat{X}$ zu erhalten. Es können dadurch qualitativ sehr hochwertige hochaufgelöste spektrale Bilder generiert werden, wie weiter unten anhand einer von den Erfindern durchgeführten Simulation nachgewiesen wird.

Wie bereits erwähnt, werden in der oben beschriebenen Ausführungsform disjunkte Segmente betrachtet, welche separat verarbeitet werden können. In einer weiteren Ausführungsform des erfindungsgemäßen Verfahrens werden überlappende Segmente verarbeitet, wobei als weiteres Kriterium bei der Koeffizientenschätzung einfließt, dass der Pixelwert eines Pixels im aktuell verarbeiteten Segment im hochaufgelösten panchromatischen Bild, der sich aus der Linearkombination basierend auf dem Koeffizientenvektor $\hat{\alpha}$ ergibt, mit dem entsprechenden überlappenden Pixelwert des rekonstruierten Bildes aus einem zuvor verarbeiteten direkt benachbarten Segment übereinstimmt. Mathematisch wird diese Koeffizientenschätzung wiederum basierend auf einer L1-L2-Norm-Minimierung über folgende Gleichungen beschrieben:

$$\hat{\boldsymbol{\alpha}} = \arg\min_{\alpha} \left\{ \lambda \|\boldsymbol{\alpha}\|_1 + \frac{1}{2} \|\tilde{\mathbf{D}}\boldsymbol{\alpha} - \tilde{\mathbf{y}}\|_2^2 \right\} \qquad (3),$$

$$\tilde{\mathbf{D}} = \begin{bmatrix} \mathbf{D}_l \\ \beta\,\mathbf{P}\mathbf{D}_h \end{bmatrix} , \quad \tilde{\mathbf{y}} = \begin{bmatrix} \mathbf{y} \\ \beta\,\mathbf{w} \end{bmatrix} \qquad (4).$$

In dieser Ausführungsform wird die Koeffizientenschätzung und die Rekonstruktion gemäß Schritten S4 und S5 sequentiell in einer vorbestimmten Reihenfolge im Bild durchgeführt, insbesondere wird mit dem oberen linken Segment im Bild gestartet und dann Zeile für Zeile die Schätzung und Rekonstruktion für aufeinander folgende und miteinander überlappende Segmente durchgeführt. In obiger Gleichung (4) bezeichnet $\mathbf{P}$ eine Diagonalmatrix, welche als Diagonalelemente 0 und 1 enthält, wobei ein Diagonalelement mit dem Wert 1 ein überlappendes Pixel des aktuellen Segments mit dem vorhergehenden Segment repräsentiert. Der Vektor $\mathbf{w}$ repräsentiert die Pixelwerte des Bildes $\hat{X}$ aus dem zuvor verarbeiteten Segment im Überlappungsbereich mit dem aktuell betrachteten Segment. $\beta$ ist ein Gewichtungsfaktor, der einen Kompromiss zwischen der Qualität der Rekonstruktion und der Konsistenz benachbarter Segmente darstellt. Die Wahl eines geeigneten Werts für $\beta$ liegt im Rahmen von fachmännischem Handeln.

Die soeben beschriebene Minimierung gemäß Gleichungen (3) und (4) kann wiederum mit an sich bekannten Standardmethoden, insbesondere mit konvexen Optimierungs-Algorithmen, gelöst werden. Die entsprechenden Koeffizientenvektoren werden dabei analog wie in der zuvor beschriebenen Ausführungsform in Schritt S5 verarbeitet, so dass sich insgesamt ein rekonstruiertes Bild $\hat{X}$ ergibt.

Die oben beschriebenen Ausführungsformen der Erfindung können in geeigneter Weise abgewandelt werden. Insbesondere kann anstatt einer sequentiellen Verarbeitung aufeinander folgender Segmente auch eine andere Art der Verarbeitung gewählt werden. Zum Beispiel können zunächst nicht-überlappende Segmente gemäß obiger Gleichung (1) verarbeitet werden. Erst anschließend werden die noch fehlenden überlappenden Segmente unter Verwendung von bereits rekonstruierten Segmenten basierend auf den obigen Gleichungen (3) und (4) verarbeitet. Ebenso besteht die Möglichkeit, eine zufällige Reihenfolge für die Verarbeitung der Segmente zu verwenden. Darüber hinaus können die geschätzten Koeffizientenvektoren einer Korrektur gemäß Anspruch 11 unterzogen werden, um hierdurch eine verbesserte Schätzung zu erhalten.

In einer weiteren Ausführungsform der Erfindung besteht im Falle von überlappenden Segmenten auch die Möglichkeit, dass die Verarbeitung ausschließlich basierend auf der obigen Gleichung (1) durchgeführt wird, d.h. die einzelnen Segmente werden so verarbeitet, als ob sie nicht überlappen würden. In dieser Variante werden dann die gemäß Schritt S5 rekonstruierten Segmente einem Nachbearbeitungsschritt unterzogen, bei dem die Pixelwerte in überlappenden Bildbereichen geeignet überblendet werden. Im einfachsten Fall kann der arithmetische Mittelwert der Pixelwerte in überlappenden Bildbereichen gebildet werden.

Die Erfindung gemäß den oben beschriebenen Ausführungsformen weist eine Reihe von Vorteilen auf. Insbesondere wird zur Lösung des Problems der Panbildschärfung eine aus dem Gebiet des Compressive Sensing bekannte Methodik verwendet, um einen spärlich-besetzten Koeffizientenvektor zur Bildrekonstruktion zu ermitteln. Die Erfindung macht dabei keine Modellannahmen für das verarbeitete panchromatische Bild. Demzufolge ist das Verfahren nicht sehr sensitiv für die spektralen Kanalformen des zur Aufnahme verwendeten Sensors. Im Vergleich zu herkömmlichen Verfahren liefert das erfindungsgemäße Verfahren ein Bild mit weniger spektraler Verzerrung.

Im Folgenden wird eine von den Erfindern durchgeführte Simulation beschrieben, welche Ergebnisse des erfindungsgemäßen Verfahrens mit an sich bekannten Verfahren der Panbildschärfung vergleicht. Als bekannte Verfahren wurden zwei IHS-Methoden berücksichtigt, welche in den weiter unten genannten Tabellen mit IHS1 und IHS2 bezeichnet sind. Darüber hinaus wurden eine PCA-Methode und das Verfahren nach Brovey als bekannte Vergleichsverfahren herangezogen. Im Rahmen der Simulation wurden multispektrale Bilder mit vier Farbkanälen (d.h. rot, grün, blau und Nahinfrarot) verwendet, welche mit einem aus dem Stand der Technik bekannten UltraCam-Sensor aufgenommen wurden. Die ursprünglichen Bilder in den einzelnen Farbkanälen weisen dabei eine hohe räumliche Auflösung von 10 cm auf. Jeder Farbkanal wurde durch Tiefpassfilterung und Heruntertastung in ein spektrales Bild niedrigerer Auflösung gewandelt, welches dann als spektrales Bild Y gemäß Fig. 1 verwendet wird. Ferner wurde durch Linearkombination der spektralen Kanäle des multispektralen Bildes ein panchromatisches Bild $X_0$ erzeugt, wobei ein Modellfehler zu den einzelnen Farbkanäle hinzugefügt wurde. Zur Validierung der Ergebnisse wurden die einzelnen rekonstruierten Farbkanäle, welche den Bildern $\hat{X}$ gemäß Fig. 1 entsprechen, wieder zu einem multispektralen Bild zusammengesetzt, wobei die Qualität dieses Bildes mit dem ursprünglichen hochaufgelösten multispektralen Bild verglichen wurde. Im Rahmen der Simulation wurde in einer ersten Variante dem panchromatischen Bild ein Modellfehler von 2,7% hinzugefügt. In einer zweiten Variante wurde ein Modellfehler von 25% berücksichtigt. Der Faktor für die Heruntertastung wurde auf 10 gesetzt. Als Parameter zur Beurteilung der Qualität der rekonstruierten Bilder wurden die nachfolgend beschriebenen Größen verwendet.

Der mittlere quadratische Fehler RMSE:

Der mittlere quadratische Fehler RMSE beschreibt den Unterschied zwischen dem ursprünglichen Bild und dem rekonstruierten Bild, indem direkt die Veränderung der Pixelwerte berechnet wird. Dieser Fehler ist wie folgt definiert:

$$\text{RMSE} = \sqrt{\frac{1}{MN}\sum_{i=1}^{M}\sum_{j=1}^{N}\left(X_{i,j} - \hat{X}_{i,j}\right)^2} \ .$$

Dabei bezeichnet $X_{i,j}$ den Pixelwert des ursprünglichen multispektralen Bildes X und $\hat{X}_{i,j}$ ist der Pixelwert des rekonstruierten Bildes X. Das rekonstruierte Bild ist dem ursprünglichen Bild umso ähnlicher, je kleiner der mittlere quadratische Fehler ist.

Der Korrelationskoeffizient ρ :

Der Korrelationskoeffizient ρ des rekonstruierten Bildes und des ursprünglichen Bildes misst die Ähnlichkeit von spektralen Merkmalen. Er ist wie folgt definiert:

$$\rho = \frac{\sum_{i,j}\left[\left(X_{i,j} - \overline{x}\right)\times\left(\hat{X}_{i,j} - \overline{\hat{x}}\right)\right]}{\sqrt{\sum_{i,j}\left[\left(X_{i,j} - \overline{x}\right)^2\right]\times\sum_{i,j}\left[\left(\hat{X}_{i,j} - \overline{\hat{x}}\right)^2\right]}} \ .$$

Dabei bezeichnet $\overline{x}$ bzw. $\overline{\hat{x}}$ die Mittelwerte des ursprünglichen Bildes X bzw. des rekonstruierten Bildes X. Ein Wert von ρ nahe bei +1 bedeutet, dass die beiden Bilder stark miteinander korreliert sind.

Der Verzerrungsgrad D:

Der Verzerrungsgrad D spiegelt direkt die Größe der Verzerrung im rekonstruierten Bild wieder. Er ist wie folgt definiert:

$$D = \frac{1}{MN}\sum_{i=1}^{M}\sum_{j=1}^{N}\left|X_{i,j} - \hat{X}_{i,j}\right| \ .$$

Die Verzerrung des rekonstruierten Bildes ist klein, wenn der Wert von D klein ist.

Der Index UIQI (Universal Image Quality Index):

Dieser Index beschreibt die Gesamtqualität des rekonstruierten Bildes. Er ist wie folgt definiert:

$$Q_0 = \frac{\sigma_{x\hat{x}}}{\sigma_x\sigma_{\hat{x}}}\times\frac{2\overline{x}\,\overline{\hat{x}}}{\left(\overline{x}^2 + \overline{\hat{x}}^2\right)}\times\frac{2\sigma_x\sigma_{\hat{x}}}{\left(\sigma_x^2 + \sigma_{\hat{x}}^2\right)} \ .$$

Dabei bezeichnen $\overline{x}$, $\sigma_x$ und $\overline{\hat{x}}$, $\sigma_{\hat{x}}$ die Mittelwerte und Standardabweichungen des ursprünglichen Bildes X bzw. des rekonstruierten Bildes X Dieser Index kombiniert drei verschiedene Faktoren, nämlich den Verlust an Korrelation, die Luminanzverzerrung und die Kontrastverzerrung. Der beste Wert dieses Index ist der Wert 1.

Durchschnittlicher Gradient $\overline{G}$ :

Der durchschnittliche Gradient $\overline{G}$ spiegelt die Kontraste der Details wieder, welche in dem Bild enthalten sind, sowie die Lesbarkeit des Bildes. Er ist wie folgt definiert:

$$\overline{G} = \frac{1}{(N-1)(M-1)} \times \sum_{i=1}^{M-1} \sum_{j=1}^{N-1} \sqrt{\left(\Delta_1 f_{i,j}^2 + \Delta_2 f_{i,j}^2\right)/2} \ .$$

$\Delta_1 f_{i,j}$ und $\Delta_2 f_{i,j}$ sind die erste Differenz entlang zweier Richtungen im Bild. Allgemein repräsentiert ein größerer Wert von $\overline{G}$ ein Bild mit höherer Auflösung.

Der Fehler ERGAS (Erreur Relative Dimensionless Global Error in Synthesis):

Dieser Fehler gibt die Gesamtqualität des rekonstruierten Bildes wieder. Er repräsentiert den Unterschied zwischen dem rekonstruierten Bild und dem ursprünglichen Bild und ist wie folgt definiert:

$$\text{ERGAS} = 100 \frac{h}{l} \sqrt{\frac{1}{k} \sum_{k=1}^{K} \left[\frac{\text{RMSE}(k)}{\overline{\hat{X}}(k)}\right]^2} \ .$$

Dabei bezeichnet h/l das Verhältnis zwischen den Pixelgrößen des rekonstruierten und des ursprünglichen Bildes. RMSE(k) und $\hat{X}(k)$ sind der mittlere quadratische Fehler bzw. der Mittelwert des k-ten spektralen Bands. Ein kleiner Wert des Fehlers ERGAS bedeutet geringe spektrale Verzerrung.

In den nachfolgenden Tabellen 1 und 2 werden die soeben beschriebenen Parameter, welche sowohl für basierend auf bekannten Methoden rekonstruierte Bilder als auch für mit dem erfindungsgemäßen Verfahren rekonstruierte Bilder ermittelt wurden, miteinander verglichen. Dabei sind als Referenzwerte diejenigen Parameterwerte angegeben, welche für die beste Qualität stehen. Der durchschnittliche Gradient ist in den Tabellen sowohl für das heruntergetastete multispektrale Bild (MS-Bild) als auch für das rekonstruierte Bild (PS-Bild) angegeben. Tabelle 1 zeigt die Ergebnisse für einen eingebrachten Modellfehler von 2,7%, wohingegen die Tabelle 2 die Ergebnisse für einen eingebrachten Modellfehler von 25% wiedergibt.

Tabelle 1

| | RMSE | ρ | D | UIQI | durchschnittlicher Gradient | | ERGAS |
| --- | --- | --- | --- | --- | --- | --- | --- |
| | | | | | MS-Bild | PS-Bild | |
| Referenzwerte | 0 | 1 | 0 | 1 | +∞ | +∞ | 0 |
| IHS1 | 4.4063 | 0.9978 | 3.4923 | 0.9918 | 0.1426 | 5.3983 | 0.6297 |
| IHS2 | 5.0060 | 0.9945 | 3.6287 | 0.9894 | 0.1426 | 5.7153 | 0.7164 |
| PCA | 17.1850 | 0.9599 | 13.4960 | 0.8309 | 0.1426 | 3.1857 | 2.4491 |
| Brovey | 9.3757 | 0.9782 | 7.9847 | 0.9709 | 0.1426 | 5.9233 | 1.3420 |
| erfindungsgemäßes Verfahren | 3.7080 | 0.9954 | 2.5903 | 0.9945 | 0.1426 | 5.5767 | 0.5319 |

Tabelle 2

| | RMSE | ρ | D | UIQI | durchschnittlicher Gradient | | ERGAS |
| --- | --- | --- | --- | --- | --- | --- | --- |
| | | | | | MS-Bild | PS-Bild | |
| Referenzwerte | 0 | 1 | 0 | 1 | +∞ | +∞ | 0 |
| IHS1 | 10.5747 | 0.9590 | 9.0370 | 0.9528 | 0.1426 | 6.0253 | 1.3052 |

(fortgesetzt)

| | RMSE | ρ | D | UIQI | durchschnittlicher Gradient | | ERGAS |
|---|---|---|---|---|---|---|---|
| | | | | | MS-Bild | PS-Bild | |
| IHS2 | 5.4250 | 0.9932 | 3.9753 | 0.9875 | 0.1426 | 5.6033 | 0.6724 |
| PCA | 17.1953 | 0.9832 | 14.0030 | 0.8259 | 0.1426 | 3.5330 | 2.4496 |
| Brovey | 10.5743 | 0.9592 | 8.6093 | 0.9535 | 0.1426 | 6.0827 | 1.4861 |
| erfindungsgemäßes Verfahren | 4.0123 | 0.9939 | 2.8743 | 0.9937 | 0.1426 | 5.9100 | 0.5760 |

Wie sich deutlich aus den obigen Tabellen ergibt, liegen die aus dem erfindungsgemäßen Verfahren resultierenden Parameter fast immer näher an den Referenzwerten als die Parameter, welche sich durch die Methoden gemäß dem Stand der Technik ergeben. Es wird somit klar ersichtlich, dass das erfindungsgemäße Verfahren ein qualitativ besseres rekonstruiertes Bild als die bekannten Verfahren liefert.

**Patentansprüche**

1. Verfahren zur rechnergestützten Verarbeitung digitalisierter Bilder, wobei die digitalisierten Bilder $(X_0, Y)$ ein panchromatisches Bild $(X_0)$ in einer ersten räumlichen Auflösung und ein oder mehrere spektrale Bilder $(Y)$ in einer zweiten räumlichen Auflösung umfassen, wobei das panchromatische und das oder die spektralen Bilder $(X_0, Y)$ die gleiche aufgenommene Szene betreffen und die zweite räumliche Auflösung niedriger als die erste räumliche Auflösung ist, **dadurch gekennzeichnet, dass**

   a) das panchromatische Bild $(X_0)$ in eine Anzahl von Segmenten mit jeweils eine Mehrzahl von Pixeln aufgeteilt wird, wodurch ein erstes Bild $(D_h)$ erhalten wird;
   b) das panchromatische Bild $(X_0)$ in ein panchromatisches Bild $(Y_0)$ in der zweiten Auflösung gewandelt wird und dieses gewandelte Bild $(Y_0)$ in eine Anzahl von Segmenten entsprechend der Segmentierung des ersten Bildes $(D_h)$ aufgeteilt wird, wodurch ein zweites Bild $(D_1)$ erhalten wird;
   c) ein jeweiliges spektrales Bild $(Y)$ in eine Anzahl von Segmenten entsprechend der Segmentierung des ersten Bildes $(D_h)$ aufgeteilt wird, wodurch ein drittes Bild $(y)$ erhalten wird;
   d) für jedes Segment des dritten Bildes $(y)$ ein Koeffizientenvektor $(\hat{\alpha})$ mit einer Anzahl von Koeffizienten geschätzt wird, wobei der Koeffizientenvektor $(\hat{\alpha})$ die Pixelwerte des jeweiligen Segments des dritten Bildes $(y)$ als eine Linearkombination der Pixelwerte der Segmente des zweiten Bildes $(D_1)$ unter der Randbedingung einer möglichst geringen Anzahl von Koeffizienten modelliert;
   e) für ein jeweiliges Segment des ersten Bildes $(D_h)$, welches dem jeweiligen Segment des dritten Bildes $(y)$ entspricht, eine Linearkombination der Pixelwerte der Segmente des ersten Bildes $(D_h)$ basierend auf dem Koeffizientenvektor $(\hat{\alpha})$ gebildet wird, woraus ein viertes Bild $(\hat{X})$ abgeleitet wird, welches das jeweilige spektrale Bild in der ersten Auflösung repräsentiert.

2. Verfahren nach Anspruch 1, **dadurch gekennzeichnet, dass** das jeweilige spektrale Bild $(y)$ in Schritt c) in Segmente aus (n x n)-Pixeln aufgeteilt wird, wobei n vorzugsweise zwischen 3 und 9 liegt.

3. Verfahren nach Anspruch 1 oder 2, **dadurch gekennzeichnet, dass** die Wandlung des panchromatischen Bildes $(X_0)$ in Schritt b) eine Tiefpass-Filterung des panchromatischen Bildes $(X_0)$, welche vorzugsweise der Punktantwort des jeweiligen spektralen Bildes $(Y)$ entspricht, und eine Heruntertastung des panchromatischen Bildes $(X_0)$ auf die zweite Auflösung umfasst.

4. Verfahren nach einem der vorhergehenden Ansprüche, **dadurch gekennzeichnet, dass** die Pixelwerte des jeweiligen Segments des vierten Bildes $(\hat{X})$ zumindest teilweise der in Schritt e) gebildeten Linearkombination der Pixelwerte der Segmente des ersten Bildes $(D_h)$ entsprechen.

5. Verfahren nach einem der vorhergehenden Ansprüche, **dadurch gekennzeichnet, dass** der Koeffizientenvektor $(\hat{\alpha})$ in Schritt d) mittels einer L1-L2-Norm-Minimierung geschätzt wird.

6. Verfahren nach einem der vorhergehenden Ansprüche, **dadurch gekennzeichnet, dass** ein geschätzter Koeffizientenvektor $\hat{\alpha}$ in Schritt d) basierend auf folgender Minimierung ermittelt wird:

$$\hat{\boldsymbol{\alpha}} = \arg\min_{\alpha}\left\{\lambda\left\|\boldsymbol{\alpha}\right\|_1 + \frac{1}{2}\left\|\mathbf{D}_l\boldsymbol{\alpha} - \mathbf{y}\right\|_2^2\right\}$$

wobei $\alpha$ der Koeffizientenvektor ist;
wobei $\lambda$ ein Lagrange-Multiplikator ist;
wobei $\mathbf{D}_l$ eine Matrix ist, welche die Pixelwerte für jedes Segment des zweiten Bildes ($D_1$) als Spalten enthält;
wobei $\mathbf{y}$ ein Vektor aus den Pixelwerten des jeweiligen Segments des dritten Bildes (y) ist;
wobei die in Schritt e) gebildete Linearkombination $\hat{\mathbf{x}}$ der Pixelwerte der Segmente des ersten Bildes ($D_h$) vorzugsweise wie folgt lautet:

$$\hat{\mathbf{x}} = \mathbf{D}_h\hat{\boldsymbol{\alpha}} \, ,$$

wobei $\mathbf{D}_h$ eine Matrix ist, welche die Pixelwerte für jedes Segment des ersten Bildes ($D_h$) als Spalten enthält.

7. Verfahren nach einem der vorhergehenden Ansprüche, **dadurch gekennzeichnet, dass** das panchromatische Bild ($X_0$) in Schritt a) in überlappende Segmente aufgeteilt wird.

8. Verfahren nach Anspruch 7, **dadurch gekennzeichnet, dass** in Schritt e) für ein jeweiliges Segment des vierten Bildes ($\hat{X}$) die Pixelwerte von überlappenden Pixeln, welche sich aus den entsprechenden Linearkombinationen der Pixelwerte der Segmente des ersten Bildes ($D_h$) ergeben, überblendet werden, wodurch sich der entsprechende Pixelwert des vierten Bildes ($\hat{X}$) ergibt.

9. Verfahren nach Anspruch 7 oder 8, **dadurch gekennzeichnet, dass** in Schritt d) ferner ein Kriterium einfließt, wonach für ein jeweiliges Segment des ersten Bildes ($D_h$) der Pixelwert eines mit einem anderen Segment überlappenden Pixels, der sich aus Linearkombination der Pixelwerte der Segmente des ersten Bildes ($D_h$) basierend auf dem Koeffizientenvektor ($\hat{\alpha}$) ergibt, einem bereits zuvor ermittelten Pixelwert des entsprechenden überlappenden Pixels aus dem vierten Bild ($\hat{X}$) entspricht.

10. Verfahren nach einem der vorhergehenden Ansprüche, **dadurch gekennzeichnet, dass** ein geschätzter Koeffizientenvektor $\hat{\alpha}$ in Schritt d) basierend auf folgender Minimierung ermittelt wird:

$$\hat{\boldsymbol{\alpha}} = \arg\min_{\alpha}\left\{\lambda\left\|\boldsymbol{\alpha}\right\|_1 + \frac{1}{2}\left\|\tilde{\mathbf{D}}\boldsymbol{\alpha} - \tilde{\mathbf{y}}\right\|_2^2\right\}$$

wobei

$$\tilde{\mathbf{D}} = \begin{bmatrix}\mathbf{D}_l \\ \beta\mathbf{P}\mathbf{D}_h\end{bmatrix}, \quad \tilde{\mathbf{y}} = \begin{bmatrix}\mathbf{y} \\ \beta\mathbf{w}\end{bmatrix}$$

wobei $\alpha$ der Koeffizientenvektor ist;
wobei $\lambda$ ein Lagrange-Multiplikator ist;
wobei $\mathbf{D}_l$ eine Matrix ist, welche die Pixelwerte für jedes Segment des zweiten Bildes ($D_1$) als Spalten enthält;
wobei $\mathbf{y}$ ein Vektor aus den Pixelwerten des jeweiligen Segments des dritten Bildes (y) ist;
wobei $\mathbf{D}_h$ eine Matrix ist, welche die Pixelwerte für jedes Segment des ersten Bildes ($D_h$) als Spalten enthält;
wobei $\mathbf{w}$ ein Vektor in Bezug auf ein Segment des ersten Bildes ($D_h$) ist, für welches bereits der Schritt e) des Verfahrens durchgeführt wurde und welches mit dem Segment des ersten Bildes ($D_h$), das dem jeweiligen Segment des dritten Bildes (y) entspricht, überlappt, wobei die Pixelwerte im Vektor $\mathbf{w}$ die überlappenden Pixel der beiden Segmente betreffen und den Pixelwerten des vierten Bildes ($\hat{X}$) entsprechen;

wobei **P** eine Diagonalmatrix ist, in der diejenigen Diagonalelemente, die den überlappenden Pixeln der beiden Segmente entsprechen, den Wert 1 aufweisen, wohingegen die anderen Diagonalelemente den Wert 0 aufweisen;

wobei β ein Gewichtungsfaktor ist;

wobei die in Schritt e) gebildete Linearkombination $\hat{\mathbf{x}}$ der Pixelwerte der Segmente des dritten Bildes vorzugsweise wie folgt lautet:

$$\hat{\mathbf{x}} = \mathbf{D}_h \hat{\boldsymbol{\alpha}},$$

wobei $\mathbf{D}_h$ eine Matrix ist, welche die Pixelwerte für jedes Segment des ersten Bildes ($D_h$) als Spalten enthält.

**11.** Verfahren nach einem der vorhergehenden Ansprüche, wenn abhängig von Anspruch 6 oder 10, bei dem der geschätzte Koeffizientenvektor $\hat{\alpha}$ vor der Durchführung des Schritts e) korrigiert wird, indem neue Matrizen $\mathbf{D}_l{'}$ und $\mathbf{D}_h{'}$ aus $\mathbf{D}_l$ und $\mathbf{D}_h$ derart erzeugt werden, dass aus $\mathbf{D}_l$ und $\mathbf{D}_h$ diejenigen Spalten eliminiert werden, für welche der jeweilige Koeffizient im geschätzten Koeffizientenvektor $\hat{\alpha}$ weniger als ein vorbestimmter Schwellwert von Null abweicht, wobei ferner aus $\hat{\alpha}$ ein verkürzter Koeffizientenvektor $\hat{\alpha}'$ erzeugt wird, in dem die entsprechenden Koeffizienten, welche weniger als der vorbestimmte Schwellwert von Null abweichen, eliminiert sind, wobei aus dem verkürzten Koeffizientenvektor $\hat{\alpha}'$ ein korrigierter Koeffizientenvektor $\tilde{\alpha}$ durch folgende Minimierung ermittelt wird:

$$\tilde{\boldsymbol{\alpha}} = \arg\min_{\hat{\alpha}'}\left\{\left\|\mathbf{D}_l{'}\hat{\boldsymbol{\alpha}}' - \mathbf{y}\right\|_2^2\right\},$$

wobei die in Schritt e) gebildete Linearkombination $\hat{\mathbf{x}}$ der Pixelwerte der Segmente des dritten Bildes wie folgt lautet:

$$\hat{\mathbf{x}} = \mathbf{D}_h{'}\,\tilde{\boldsymbol{\alpha}}.$$

**12.** Verfahren nach einem der vorhergehenden Ansprüche, **dadurch gekennzeichnet, dass** die jeweiligen Segmente in Schritt d) und e) in einer vorbestimmten Reihenfolge im dritten bzw. ersten Bild (y, $D_h$) oder in zufälliger Reihenfolge verarbeitet werden.

**13.** Verfahren nach einem der vorhergehenden Ansprüche, wenn abhängig von Anspruch 7, **dadurch gekennzeichnet, dass** in Schritt d) und e) zunächst nicht-überlappende Segmente und erst anschließend überlappende Segmente verarbeitet werden.

**14.** Verfahren nach einem der vorhergehenden Ansprüche, **dadurch gekennzeichnet, dass** die digitalisierten Bilder ($X_0$, Y) eine Aufnahme eines Ausschnitts der Erdoberfläche darstellen, wobei die Aufnahmen vorzugsweise mit einem Multispektralinstrument und/oder mit einem Hyperspektralinstrument gemacht sind.

**15.** Vorrichtung zur Verarbeitung digitalisierter Bilder, wobei die digitalisierten Bilder ($X_0$, Y) ein panchromatisches Bild in einer ersten räumlichen Auflösung und ein oder mehrere spektrale Bilder (Y) in einer zweiten räumlichen Auflösung umfassen, wobei das panchromatische und das oder die spektralen Bilder ($X_0$, Y) die gleiche aufgenommene Szene betreffen und die zweite Auflösung niedriger als die erste Auflösung ist, **dadurch gekennzeichnet, dass** die Vorrichtung umfasst:

- ein erstes Mittel (M1) zur Erzeugung eines ersten Bildes ($D_h$), indem das panchromatische Bild ($X_0$) in eine Anzahl von Segmenten mit jeweils einer Mehrzahl von Pixeln aufgeteilt wird;
- ein zweites Mittel (M2) zur Erzeugung eines zweiten Bildes ($D_1$), indem das panchromatische Bild ($X_0$) in ein panchromatisches Bild ($Y_0$) in der zweiten Auflösung gewandelt wird und dieses gewandelte Bild ($Y_0$) in eine Anzahl von Segmenten entsprechend der Segmentierung des ersten Bildes ($D_h$) aufgeteilt wird;
- ein drittes Mittel (M3) zur Erzeugung eines dritten Bildes (y), indem ein jeweiliges spektrales Bild (y) in eine Anzahl von Segmenten entsprechend der Segmentierung des ersten Bildes ($D_h$) aufgeteilt wird;
- ein viertes Mittel (M4) zur Schätzung von Koeffizientenvektoren ($\hat{\alpha}$), welches derart ausgestaltet ist, dass für jedes Segment des dritten Bildes (y) ein Koeffizientenvektor ($\hat{\alpha}$) mit einer Anzahl von Koeffizienten geschätzt wird, wobei der Koeffizientenvektor ($\hat{\alpha}$) die Pixelwerte des jeweiligen Segments des dritten Bildes (y) als eine Linearkombination der Pixelwerte der Segmente des zweiten Bildes ($D_1$) unter der Randbedingung einer möglichst geringen Anzahl von Koeffizienten modelliert;

- ein fünftes Mittel (M5) zur Erzeugung eines vierten Bildes ($\hat{X}$), indem für ein jeweiliges Segment des ersten Bildes ($D_h$), welches dem jeweiligen Segment des dritten Bildes (y) entspricht, eine Linearkombination der Pixelwerte der Segmente des ersten Bildes ($D_h$) basierend auf dem Koeffizientenvektor ($\hat{\alpha}$) gebildet wird, woraus das vierte Bild ($\hat{x}$) abgeleitet wird, welches das jeweilige spektrale Bild in der ersten Auflösung repräsentiert.

16. Vorrichtung nach Anspruch 15, **dadurch gekennzeichnet, dass** die Vorrichtung derart ausgestaltet ist, dass ein Verfahren nach einem der Ansprüche 2 bis 14 mit der Vorrichtung durchführbar ist.

17. Computerprogrammprodukt mit einem auf einem maschinenlesbaren Träger gespeicherten Programmcode zur Durchführung eines Verfahrens nach einem der Ansprüche 1 bis 14, wenn das Programm auf einem Rechner abläuft.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **C. POHL ; J.L. VAN GERNDEREN.** Multisensor image fusion in remote sensing: Concepts, methods and applications. *International Journal of Remote Sensing,* 1998, vol. 19 (5), 823-854